# EUROPEAN PATENT SPECIFICATION

(11) **EP 2 399 670 B1**
(45) Date of publication and mention of the grant of the patent: **22.04.2020**
(21) Application number: 11250286.9
(22) Date of filing: 10.03.2011
(51) Int. Cl.: B01J 29/06, B01J 35/04, B01D 53/94

(54) **Zeolite structure and manufacturing method thereof**
Zeolith-Struktur und Verfahren zu deren Herstellung
Structure zéolitique et sa méthode de production

(30) Priority: 12.03.2010 JP 2010055692; 08.03.2011 JP 2011049818
(43) Date of publication of application: 28.12.2011
(73) Proprietor: NGK Insulators, Ltd., Nagoya-city, Aichi 467-8530 (JP)
(72) Inventor: Hirose, Shogo, Nagoya City Aichi-ken 467-8530 (JP); Takahashi, Akira, Nagoya City Aichi-ken 467-8530 (JP); Kodama, Eriko, Nagoya City Aichi-ken 467-8530 (JP)
(74) Representative: Mewburn Ellis LLP

(56) References cited:
- EP-A2- 2 123 614
- EP-A2- 2 130 591
- EP-A2- 2 130 592

## Description

### BACKGROUND OF THE INVENTION

### Field of the Invention

The present invention relates to a zeolite structure and a manufacturing method thereof, and more particularly, it relates to a zeolite structure which is excellent in exhaust gas purification performance and strength, and a manufacturing method thereof.

### Description of the Related Art

Heretofore, for the purpose of removing NOₓ and the like contained in an exhaust gas discharged from an engine for a car, an engine for a construction machine, a stationary engine for an industry, a burning apparatus or the like, or adsorbing hydrocarbons and the like from the exhaust gas, there has been used a catalyst body obtained by loading an ion-exchanged zeolite onto a ceramic carrier (a honeycomb structure) having a honeycomb shape and made of cordierite or the like.

When a zeolite is loaded onto the ceramic carrier made of cordierite or the like as described above, part of spatial portions in the ceramic carrier is occupied by the zeolite, whereby a pressure loss during passing of the exhaust gas increases. Moreover, cordierite or the like constituting the ceramic carrier does not exhibit the function of removing NOₓ, or adsorbing hydrocarbons or the like. Therefore, in a case where the catalytic effect of the catalyst body is set to be constant (to uniform the amount of the zeolite), the higher a volume ratio of cordierite or the like in the catalyst body is, the larger the pressure loss is.

To solve the problem, there is suggested a method of forming and firing a forming raw material containing a zeolite ion-exchanged with metal ions to manufacture a honeycomb structure made of the zeolite (e.g., see Patent Documents 1 and 2).
[Patent Document 1] WO2009/141874A1
[Patent Document 2] WO2009/141878A1

EP 2 123 614 describes a honeycomb structure including a honeycomb unit containing a zeolite and an inorganic binder and having plural separating walls disposed in the longitudinal direction of the honeycomb unit, defining plural throughholes separated by the separating walls. The zeolite includes a first zeolite ion-exchanged with one or more kinds of metal selected from the group consisting of Cu, Mn, Ag, and V, and a second zeolite ion-exchanged with one or more kinds of metal selected from the group consisting of Fe, Ti, and Co. The ratio of the first zeolite by weight to a total weight of the first and second zeolites is greater at a center of the separating wall than at a surface thereof. The ratio of the second zeolite by weight to the total weight of the first and second zeolites is greater at the surface of the separating wall than at the center thereof.

EP 2 130 591 describes a honeycomb structure including at least one honeycomb unit including zeolite; an inorganic binder; and cell walls defining cells extending along the longitudinal direction of the honeycomb unit. The honeycomb unit has one or more peak values of the log differential pore volume in a pore diameter range between 0.006 and 0.06 µm and has one or more peak values of the log differential pore volume in a pore diameter range greater than 0.06 µm and less than or equal to 1 µm. The volume of pores having diameters in a range plus or minus 0.03 µm of a pore diameter corresponding to the highest peak value in the pore diameter range greater than 0.06 µm and less than or equal to 1 µm, amounts to 60% to 95% of the volume of pores having diameters greater than 0.06 µm and less than or equal to 1 µm.

EP 2 130 592 describes a honeycomb structure having a honeycomb unit in which zeolite and an inorganic binder are contained and plural cells extending from one end face to the other end face along a longitudinal direction are partitioned by cell walls. In the honeycomb structure, the content of the zeolite per apparent unit volume of the honeycomb unit is 230 g/L or greater, the porosity of all the pores in the cell walls is 40% or less, the porosity of pores having diameters in the range of 0.005 µm through 0.02 µm in the cell walls is 5% or greater, and the porosity of pores having diameters in the range of 0.05 µm through 0.2 µm in the cell walls is 17.5% or greater.

### SUMMARY OF THE INVENTION

Heretofore, in a zeolite structure (a honeycomb structure made of a zeolite) having a honeycomb shape and obtained by forming and firing a zeolite ion-exchanged with metal ions, there has been a problem that the structure having a high purification performance has a low strength, and the structure having a high strength has a low purification performance.

The present invention has been developed in view of the above problem, and an object thereof is to provide a zeolite structure having excellent exhaust gas purification performance and strength, and a manufacturing method thereof.

To achieve the above object, according to the present invention, there are provided a zeolite structure and a manufacturing method thereof as follows.
[1] A zeolite structure as set out in the appended claim 1.
[2] The zeolite structure according to [1], wherein in the partition walls, a content ratio of the zeolite ion-exchanged with the metal ions is from 50 to 80 mass%.
[3] The zeolite structure according to [1] or [2], wherein a porosity of the partition walls of the zeolite base material is from 20 to 70%.
[4] The zeolite structure according to any one of [1] to [3], wherein a cell density of the zeolite base material is from 7 to 155 cells/cm².
[5] The zeolite structure according to any one of [1] to [4], wherein a thickness of the partition walls of the zeolite base material is from 50 µm to 2 mm.
[6] The zeolite structure according to any one of [1] to [5], wherein the metal ions included in the zeolite constituting the partition walls are at least one type selected from the group consisting of iron ions, copper ions and silver ions.
[7] A manufacturing method of a zeolite structure as set out in the appended claim 7.

The zeolite structure of the present invention comprises the zeolite base material having the honeycomb shape. "The pore diameter distribution of the partition walls in a case where the abscissa indicates the pore diameter (µm) and the ordinate indicates the log differential pore volume (cm³/g)" is represented by the curve having the first maximum point in a range of pore diameters from 0.002 to 0.05 µm and the second maximum point in a range of pore diameters from 0.06 to 10 µm, and a value (A/B) obtained by dividing a first maximum value A which is the maximum value at the first maximum point by a second maximum value B which is the maximum value at the second maximum point is from 1.0 to 20. Therefore, the zeolite structure has a high strength and an excellent purification performance. That is, in the zeolite structure of the present invention, A/B is set to 1.0 or more so that the ratio of "pores formed among zeolite particles" having large pore diameters does not become excessively large, thereby improving the strength of the zeolite structure. Moreover, A/B is set to 20 or less so that the ratio of "the pores formed among the zeolite particles" having large pore diameters does not become excessively small, thereby improving diffusion of a gas through the partition walls (improving an exhaust gas purification ratio). Moreover, in the zeolite structure of the present invention, since the structure having the honeycomb shape is made of the zeolite, NOₓ or hydrocarbons in the exhaust gas can efficiently be removed.

The manufacturing method of the zeolite structure of the present invention includes the step of extruding the forming raw material containing the zeolite powder ion-exchanged with the metal ions and having an average particle diameter of 5 to 20 µm, and the forming auxiliary agent having an average particle diameter of 0.1 to 5 µm at a mass ratio which is from 8.0:2.0 to 5.0:5.0, to obtain the formed article having the honeycomb shape and including the partition walls disposed to form the plurality of cells which become the through channels of the fluid and extend from one end face to the other end face; and the step of firing the formed article having the honeycomb shape. Therefore, it is possible to obtain the zeolite structure "comprising the zeolite base material having the honeycomb shape, wherein the pore diameter distribution of the partition walls in a case where the abscissa indicates the pore diameter and the ordinate indicates the log differential pore volume is represented by the curve having the first maximum point in a range of pore diameters from 0.001 to 0.05 µm and the second maximum point in a range of pore diameters from 0.05 to 10 µm, and the value (A/B) obtained by dividing the first maximum value A at the first maximum point by the second maximum value B at the second maximum point is from 1.0 to 20."

### BRIEF DESCRIPTION OF THE DRAWINGS

Fig. 1 is a perspective view schematically showing an embodiment of a zeolite structure of the present invention;
Fig. 2 is an exemplary diagram showing a section of the embodiment of the zeolite structure of the present invention which is parallel to a central axis thereof; and
Fig. 3 is a graph showing a pore diameter distribution of partition walls in the embodiment of the zeolite structure of the present invention.

### DESCRIPTION OF THE PREFERRED EMBODIMENT

Next, a mode for carrying out the present invention will be described in detail with reference to the drawings, but it should be understood that the present invention is not limited to the following embodiment.

### (1) Zeolite Structure:

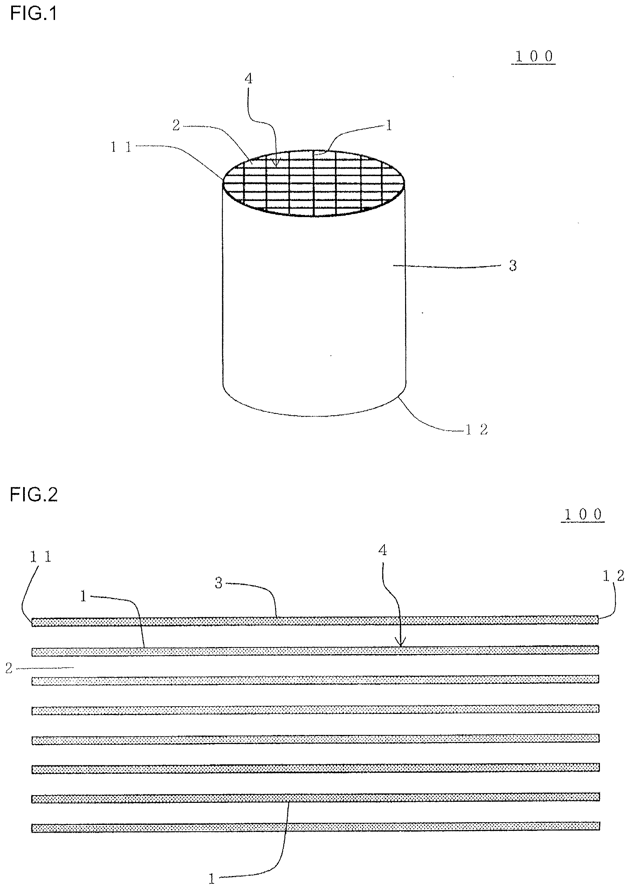

As shown in Fig. 1 and Fig. 2, an embodiment of a zeolite structure of the present invention comprises a zeolite base material 4 having a honeycomb shape and including partition walls 1 disposed to form a plurality of cells 2 which become through channels of a fluid and extend from one end face 11 to the other end face 12. The partition walls 1 contain a zeolite ion-exchanged with metal ions, a pore diameter distribution of the partition walls in a case where the abscissa indicates a pore diameter and the ordinate indicates a log differential pore volume is represented by a curve having a first maximum point in a range of pore diameters from 0.001 to 0.05 µm and a second maximum point in a range of pore diameters from 0.05 to 10 µm, and a value (A/B) (subjected to division) obtained by dividing a first maximum value A which is a maximum value at the first maximum point by a second maximum value B which is a maximum value at the second maximum point is from 1.0 to 20. The pore diameter distribution of the partition walls is represented as "a log differential pore volume distribution" (dV/d (log₁₀D) : V is a pore volume per unit mass and D is a pore diameter) in a case where the abscissa indicates the pore diameter (µm) and the ordinate indicates the log differential pore volume (cm³/g).

Here, the pore diameter distribution of the partition walls 1 is measured by mercury porosimetry using a mercury porosimeter (Auto Pore IV model 9500 manufactured by Micromeritics, Inc.). The maximum value (the first maximum value or the second maximum value) is a maximum value during measurement. Moreover, the first maximum value and the second maximum value are maximum values in the log differential pore volume distribution output with a resolution which is 10% of the pore diameter.

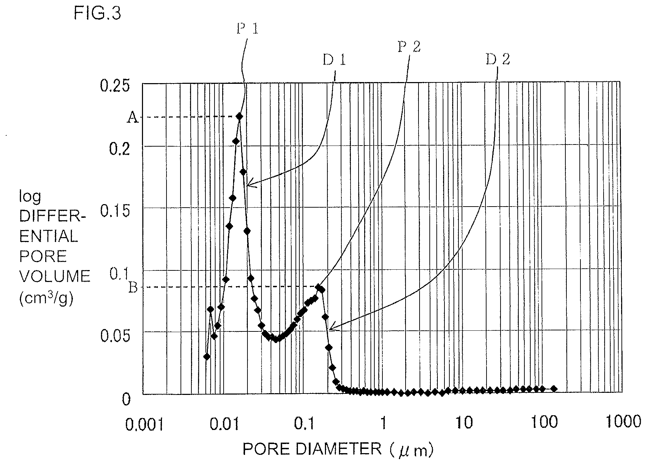

Here, "the pores of the partition walls (of the zeolite base material)" include pores (macropores) formed among zeolite crystal particles and pores (mesopores) formed in a forming auxiliary agent, but pores (micropores) included in zeolite crystals of a crystal structure are not included. In the zeolite structure of the present embodiment, as shown in Fig. 3, the pore diameter distribution (the log differential pore volume distribution) of the partition walls has two "peaks (a mountain-like distribution)" (a first peak D1 and a second peak D2). Moreover, the log differential pore volume at a point (a first maximum point P1) having a maximum value of the log differential pore volume (cm³/g) in the first peak D1 has the first maximum value A, and the log differential pore volume at a point (a second maximum point P2) having a maximum value of the log differential pore volume (cm³/g) in the second peak D2 has the second maximum value B. Fig. 1 is a perspective view schematically showing an embodiment of the zeolite structure of the present invention. Fig. 2 is an exemplary diagram showing the section of the embodiment of the zeolite structure of the present invention which is parallel to a central axis thereof. Fig. 3 is a graph showing the pore diameter distribution of the partition walls in the embodiment of the zeolite structure of the present invention. In Fig. 3, the abscissa indicates the pore diameter (µm), and the ordinate indicates "the log differential pore volume (cm³/g)" in the pore diameter distribution of the partition walls (the log differential pore volume distribution).

In the zeolite structure of the present embodiment, the pore diameter distribution of the partition walls has two peaks (the first peak D1 and the second peak D2), whereby it is considered that two types of pores are roughly present. It is considered from ranges of pore diameters that the two types of pores are pores included in a forming auxiliary agent and pores formed among zeolite particles. It is also considered that mainly "the first peak D1" originates from the pores of the forming auxiliary agent and "the second peak D2" originates from the pores formed among the zeolite particles. This is because the pore diameters of the pores included in the forming auxiliary agent are mainly present in a range of 0.002 to 0.05 µm, and the pore diameters of the pores formed among the zeolite particles are mainly present in a range of 0.06 to 10 µm.

In the zeolite structure of the present embodiment, the value (A/B) obtained by dividing the first maximum value A in the first peak D1 by the second maximum value B in the second peak D2 is from 1.0 to 20, and preferably from 5.0 to 10. If A/B is smaller than 1.0, the strength of the zeolite structure unfavorably lowers. That is, in the zeolite structure of the present invention, A/B is set to 1.0 or more so that the ratio of "the pores formed among the zeolite particles" having large pore diameters does not become excessively large, thereby improving the strength of the zeolite structure. Moreover, if A/B is larger than 20, a gas is not easily diffused in the partition walls of the zeolite structure so that the ratio of "the pores formed among the zeolite particles" having large pore diameters does not become excessively small (improving the exhaust gas purification ratio), whereby an exhaust gas purification ratio unfavorably lowers. That is, A/B is set to 20 or less, thereby improving the diffusion of the gas in the partition walls. Moreover, in the zeolite structure of the present invention, a structure having a honeycomb shape is made of the zeolite, whereby NOₓ or hydrocarbons in the exhaust gas can efficiently be removed.

In the zeolite structure of the present embodiment, the content ratio of "a zeolite ion-exchanged with metal ions" in the partition walls 1 is preferably from 50 to 80 mass%, and further preferably from 60 to 70 mass%. If the content ratio of "the zeolite ion-exchanged with the metal ions" is smaller than 50 mass%, an exhaust gas purifying ability lowers sometimes. If the content ratio of "the zeolite ion-exchanged with the metal ions" is larger than 80 mass%, a strength of the zeolite structure lowers sometimes.

Examples of components other than "the zeolite ion-exchanged with the metal ions" constituting the partition walls 1 of the zeolite structure of the present embodiment include alumina and montmorillonite.

In the zeolite structure of the present embodiment, the zeolite forming (constituting) the partition walls 1 of the zeolite base material 4 is ion-exchanged with the metal ions, and includes the metal ions. The metal ions included in the zeolite are preferably of at least one type selected from the group consisting of iron ions, copper ions and silver ions. Furthermore, for the purpose of NOₓ removal, the metal ions preferably include at least the iron ions and the copper ions. For the purpose of adsorption of hydrocarbons, the metal ions preferably include at least the silver ions and the copper ions.

Examples of the type of the zeolite constituting a zeolite structure 100 of the present embodiment include ZSM-5, β-zeolite, ZSM-11, chabazite, and ferrierite. Among these types of zeolites, the type of zeolite having a satisfactory purification performance and a satisfactory adsorption performance is preferable, i.e., ZSM-5 and β-zeolite are preferable.

Moreover, the porosity of the partition walls of the zeolite base material is preferably from 20 to 70%, and further preferably from 40 to 60%. If the porosity is smaller than 20%, the gas does not easily permeate the partition walls, and a purification ratio lowers sometimes. If the porosity is larger than 70%, the strength of the zeolite base material lowers sometimes. The porosity of the partition walls is a value measured by mercury porosimetry using a mercury porosimeter.

It is to be noted that as to the average pore diameter of the partition walls and the porosity of the partition walls, the porosity is measured by using, as targets, pores (macropores) formed among zeolite crystal particles and pores (mesopores) included in a forming auxiliary agent. Pores (micropores) formed in a crystal structure of the zeolite crystals are not used as the targets. Here, the pores (micropores) formed in the crystal structure of the zeolite crystals are inherent in the type of zeolite. For example, ZSM-5 has pores of oxygen ten-membered rings, and pore diameters of about 5 to 6 Å. Moreover, β-zeolite has pores of oxygen twelve-membered rings, and pore diameters of about 5 to 7.5 Å.

In the zeolite structure of the present embodiment, thicknesses of the partition walls are preferably from 50 µm to 2 mm, and further preferably from 100 µm to 1 mm. If the thickness is smaller than 50 µm, the strength of the zeolite structure lowers sometimes. If the thickness is larger than 2 mm, a pressure loss when the gas passes through the zeolite structure increases sometimes.

Moreover, there is not any special restriction on the cell density of the zeolite structure of the present embodiment, but the cell density is preferably from 7 to 155 cells/cm², and further preferably from 31 to 93 cells/cm². If the cell density is larger than 155 cells/cm², the pressure loss when the gas passes through a formed zeolite article increases sometimes. If the cell density is smaller than 7 cells/cm², an area to perform an exhaust gas purification treatment decreases sometimes.

An area in the section of the zeolite structure 100 of the present embodiment which is orthogonal to an extending direction of the cells 2 is preferably from 300 to 200000 mm². If the area is smaller than 300 mm², the area of the partition walls where the exhaust gas can be treated may become small. Additionally, the pressure loss may become high. If the area is larger than 200000 mm², the strength of the zeolite structure 100 may lower.

There is not any special restriction on the shape of the cells of the zeolite base material 4 constituting the zeolite structure 100 of the present embodiment (i.e., the cell shape in the section of the zeolite structure which is orthogonal to a central axis direction (the cell extending direction) of the structure), and examples of the shape include a triangular shape, a quadrangular shape, a hexagonal shape, an octagonal shape, a round shape, and a combination of these shapes.

There is not any special restriction on the whole shape of the zeolite structure of the present embodiment, and examples of the shape include a cylindrical shape, a tubular shape with an oval bottom surface and another desirable shape. Moreover, as to the size of the zeolite structure, when the structure has, for example, a cylindrical shape, the diameter of the bottom surface thereof is preferably from 20 to 500 mm, and further preferably from 70 to 300 mm. Moreover, the length of the zeolite structure along the central axis direction is preferably from 10 to 500 mm, and further preferably from 30 to 300 mm.

As shown in Fig. 1, the zeolite structure 100 of the present embodiment preferably comprises an outer peripheral wall 3 disposed to surround the whole outer periphery of the partition walls 1. A material of the outer peripheral wall 3 does not necessarily have to be the same material as that of the partition walls, but the material preferably mainly contains the same material as that of the partition walls, or mainly contains a material having physical properties equivalent to those of the partition walls. Furthermore, the partition walls and the outer peripheral wall preferably contain the same material. This is because if the material of the outer peripheral wall 3 is noticeably different in viewpoints of physical properties such as heat resistance and thermal expansion coefficient, a problem such as breakdown of the partition walls occurs sometimes. The outer peripheral wall 3 may be extrusion-formed integrally with the partition walls. Alternatively, after the forming, an outer peripheral portion may be processed in a desirable shape, and coated. Moreover, the thickness of the outer peripheral wall 3 constituting the outermost periphery of the zeolite structure of the present embodiment is preferably 10 mm or less. If the thickness is larger than 10 mm, the area to perform the exhaust gas purification treatment may become small.

Further in the zeolite structure 100 of the present embodiment, a catalyst may be loaded onto the partition walls of the zeolite base material 4. Examples of the catalyst to be loaded include a noble metal, an alkali metal compound, and an alkali earth metal compound. When the noble metal, the alkali metal compound or the alkali earth metal compound is loaded as the catalyst, an NOₓ gas purification ratio can be increased.

### (2) Manufacturing Method of Zeolite Structure:

Next, an embodiment of a manufacturing method of the zeolite structure of the present invention will be described.

The manufacturing method of the zeolite structure of the present embodiment includes a step of extruding a forming raw material containing a zeolite powder ion-exchanged with the metal ions and having an average particle diameter of 5 to 20 µm, and a forming auxiliary agent having an average particle diameter of 0.1 to 5 µm at a mass ratio which is from 8.0:2.0 to 5.0:5.0, to obtain a formed article having a honeycomb shape and including partition walls disposed to form a plurality of cells which become through channels of a fluid and extend from one end face to the other end face (the forming step); and a step of firing the formed article having the honeycomb shape (the firing step).

In this way, the manufacturing method of the zeolite structure of the present embodiment extrudes the forming raw material containing the zeolite powder having an average particle diameter of 5 to 20 µm, and the forming auxiliary agent having an average particle diameter of 0.1 to 5 µm at the ratio which is from 8.0:2.0 to 5.0:5.0, to obtain the formed article having the honeycomb shape. Therefore, in the obtained zeolite structure, "the pore diameter distribution of the partition walls in a case where the abscissa indicates the pore diameter and the ordinate indicates the log differential pore volume is represented by the curve having the first maximum point P1 in a range of pore diameters from 0.001 to 0.05 µm and the second maximum point P2 in a range of pore diameters from 0.05 to 10 µm, and the value (A/B) obtained by dividing the first maximum value A at the first maximum point P1 by the second maximum value B at the second maximum point P2 is from 1.0 to 20." That is, the pore diameter distribution of the zeolite structure can be controlled by the average particle diameter of the zeolite powder, the average particle diameter of the forming auxiliary agent and "the ratio between the zeolite powder and the forming auxiliary agent" contained in the forming raw material. The formed article having the honeycomb shape has a shape including the partition walls 1 disposed to form a plurality of cells 2 which become the through channels of the fluid and extend from one end face 11 to the other end face 12 as in the zeolite structure 100 shown in Fig. 1 and Fig. 2.

Hereinafter, the manufacturing method of the zeolite structure of the present embodiment will be described in more detail.

### (2-1) Forming Step:

First, the step extrudes the forming raw material containing the zeolite powder ion-exchanged with the metal ions and having an average particle diameter of 5 to 20 µm, and the forming auxiliary agent having an average particle diameter of 0.1 to 5 µm, to obtain the formed article having the honeycomb shape including the partition walls disposed to form the plurality of cells which become the through channels of the fluid and extend from the one end face to the other end face.

A method of ion-exchanging the zeolite powder with the metal ions is as follows. A solution for ion exchange containing the metal ions for ion exchange (the metal ion containing solution) is prepared. For example, when ion exchange is performed by using the silver ions, an aqueous solution of silver nitrate or silver acetate is prepared. Moreover, when the ion exchange is performed by using the copper ions, an aqueous solution of copper acetate, copper sulfate or copper nitrate is prepared. Furthermore, when the ion exchange is performed by using the iron ions, an aqueous solution of iron sulfate or iron acetate is prepared. The concentration of the solution for ion exchange is preferably from 0.05 to 0.5 (mol/liter). Then, the zeolite powder is immersed into the solution for ion exchange. Immersion time can appropriately be determined in accordance with the amount of the metal ions subjected to the ion exchange or the like. Then, the solution for ion exchange is filtered by using a mesh made of a metal or a resin and capable of trapping the zeolite powder, to separate the zeolite powder from ion exchange water. Afterward, the separated zeolite powder is dried and then calcinated to preferably obtain the ion-exchanged zeolite powder. Drying conditions are preferably from 80 to 150°C and from one to ten hours. Calcinating conditions are preferably from 400 to 600°C and from one to ten hours.

Moreover, the (fired) zeolite powder is subjected to an ion exchange treatment plural times which is the ion exchange treatment with the metal ions, and the type of the metal ions in "at least one" ion exchange treatment is preferably different from the type of the metal ions in the "remaining" ion exchange treatments. Thus, in the plurality of ion exchange treatments, the type of the metal ions in "at least one" ion exchange treatment is set to be different from that of the metal ions in the "remaining" ion exchange treatments, whereby it is possible to obtain a zeolite raw material including a plurality of metal ions.

The metal ions included in the zeolite powder are preferably of at least one type selected from the group consisting of iron ions, copper ions and silver ions. Furthermore, for the purpose of the NOₓ gas purification, the metal ions preferably include at least iron ions and copper ions, and for the purpose of adsorption of hydrocarbons, the metal ions preferably include at least silver ions and copper ions. Therefore, the metal ions used to ion-exchange the zeolite powder with the metal ions can appropriately be selected in accordance with the above purpose.

The forming raw material is prepared by mixing the zeolite powder ion-exchanged with the metal ions (hereinafter referred to as "the ion-exchanged zeolite powder" in some cases), the forming auxiliary agent, and the like.

Examples of the type of the zeolite powder (the zeolite powder before the ion exchange) can include powder of ZSM-5, powder of β-zeolite, powder of ZSM-11, powder of chabazite, and powder of ferrierite. Among these types of zeolites, the type of the powder having a satisfactory purification performance and a satisfactory adsorption performance is preferable, i.e., the powder of ZSM-5 and the powder of β-zeolite are preferable. The average particle diameter of the zeolite powder is from 5 to 20 µm, and preferably from 8 to 15 µm. If the average particle diameter is smaller than 5 µm, the pore volume of the pores formed among zeolite particles becomes small, and hence "A/B" becomes large, which unfavorably lowers an exhaust gas purification efficiency of the obtained zeolite structure. If the average particle diameter is larger than 20 µm, the pore volume of the pores formed among the zeolite particles becomes large, and hence "A/B" becomes small, which unfavorably lowers the strength of the obtained zeolite structure. It is to be noted that the above "A/B" in the description of the manufacturing method of the zeolite structure of the present embodiment has the same meaning as "A/B" in the above description of the zeolite structure of the present invention.

The average particle diameter of the zeolite powder is a value measured by a laser diffraction method.

The average particle diameter of the forming auxiliary agent is from 0.1 to 5 µm, and preferably from 0.5 to 2 µm. If the average particle diameter is smaller than 0.1 µm, the forming auxiliary agent which covers the particles of the zeolite powder becomes excessively dense, and unfavorably lowers the purification performance. If the average particle diameter is larger than 5 µm, mutual bonding of the zeolite particles is disturbed by the forming auxiliary agent having large particle diameters, which unfavorably lowers the strength of the zeolite structure. The average particle diameter of the forming auxiliary agent is a value measured by the laser diffraction method.

The mass ratio between the ion exchange zeolite powder and the forming auxiliary agent in the forming raw material (the ion exchange zeolite powder:the forming auxiliary agent) is preferably from 8.0:2.0 to 5.0:5.0, and further preferably from 7.0:3.0 to 6.0:4.0. If the size of the ratio of the ion exchange zeolite powder is larger than "8.0:2.0", the pore volume of the pores formed among the zeolite particles becomes large, and hence "A/B" becomes small, which unfavorably lowers the strength of the obtained zeolite structure. If the size of the ratio of the ion exchange zeolite powder is smaller than "5.0:5.0", the pore volume of the pores formed among the zeolite particles becomes small, and hence "A/B" becomes large, which unfavorably lowers the exhaust gas purification efficiency of the obtained zeolite structure.

Specifically, the forming auxiliary agent in the forming raw material is include alumina sol, montmorillonite, or boehmite.

The content of water in the forming raw material is preferably from 30 to 70 parts by mass with respect to 100 parts by mass of the ion exchange zeolite powder.

There is not any special restriction on a method of mixing the ion exchange zeolite powder, the forming auxiliary agent and the like, and a known method can be employed. For example, a method using a mixer such as Loedige mixer is preferable.

Next, the forming raw material is kneaded to obtain a columnar formed article. There is not any special restriction on a method of kneading the forming raw material to obtain the columnar formed article, and examples of the method can include methods using a kneader and a vacuum clay kneader.

Next, the columnar formed article is extrusion-formed to obtain the formed article having the honeycomb shape as in the zeolite structure 100 shown in Fig. 1. The formed article having the honeycomb shape includes the partition walls disposed to form the plurality of cells which become the through channels of the fluid and extend from one end face to the other end face. During the extrusion forming, a die having a desirable whole shape, cell shape, partition wall thickness, cell density and the like is preferably used. As a material of the die, a metal which does not easily wear is preferable.

### (2-2) Firing Step

Next, the obtained formed article having the honeycomb shape is fired, but drying is preferably performed before firing the obtained formed article having the honeycomb shape (a drying step). There is not any special restriction on a drying method, and examples of the method can include electromagnetic heating systems such as microwave heating drying and high frequency inductive heating drying, and external heating systems such as hot air drying and superheated steam drying. Among these methods, there is preferably a method of drying the article to remove a predetermined amount of water by the electromagnetic heating system and then drying the article to remove the remaining water by the external heating system, and in this method, the whole formed article can quickly and uniformly be dried so as to prevent cracks from being generated.

Moreover, the formed article having the honeycomb shape is preferably calcinated before firing (finally firing) the formed article having the honeycomb shape (a calcinating step). The article is calcinated to degrease the article. There is not any special restriction on this method, as long as organic substances (the organic substances in alumina sol, etc.) can be removed. As calcinating conditions, the article is preferably heated at about 200 to 1000°C in an oxidizing atmosphere for about three to 100 hours.

Next, the formed article having the honeycomb shape is fired to obtain the zeolite structure (a firing step). There is not any special restriction on a firing method, and the article can be fired by using an electric furnace, a gas furnace or the like. As firing conditions, the article is preferably heated at 500 to 900°C in the atmosphere for one to ten hours.

It is to be noted that through the firing, the forming auxiliary agent (alumina sol or boehmite) in the forming raw material becomes alumina.

### [Examples]

Hereinafter, the present invention will further specifically be described with respect to examples, but the present invention is not limited to these examples.

### (Example 1)

As a zeolite powder, ZSM-5 having SiO₂/Al₂O₃ (molar ratio) of 60 was used, and it was ion-exchanged with copper ions. The zeolite powder had an average particle diameter of 15 µm. The average particle diameter was a value measured by using a laser diffraction/scattering type particle size analysis meter. To the zeolite powder, boehmite having an average particle diameter of 2 µm was added as a forming auxiliary agent, and water was further added and mixed to obtain a mixture (a forming raw material) having fluidity. A mass ratio (the zeolite powder:the forming auxiliary agent) between the zeolite powder and the forming auxiliary agent (boehmite) in the mixture (the forming raw material) was set to "8.0:2.0". Moreover, a content of water in the mixture was 55 parts by mass with respect to 100 parts by mass of the zeolite powder. Then, the mixture was kneaded by a vacuum clay kneader to obtain a columnar formed article, and the obtained columnar formed article was extruded to obtain a formed article having a honeycomb shape.

Next, the obtained formed article having the honeycomb shape was dried, degreased, and then fired to obtain a zeolite structure having a honeycomb shape (Example 1). As drying conditions, the article was dried at 40°C for eight hours, and then dried at 120°C for 48 hours. Degreasing conditions were 450°C and five hours. Firing conditions were 650°C and five hours. Then, a shape of the obtained zeolite structure having the honeycomb shape was a square pole having a square bottom surface with one side of 30 mm and having a length of 150 mm along a central axis direction. Moreover, in the zeolite structure having the honeycomb shape, a partition wall thickness was 0.3 mm, and a cell density was 47 cells/cm².

As to the obtained zeolite structure, "porosity (%)", "zeolite content (g/liter)", "A/B", "A-axis compressive strength" and "NOₓ purification ratio (%)" were measured by the following method. Results are shown in Table 1. In Table 1, column of "zeolite particle diameter (µm)" indicates an average particle diameter of zeolite particles used as a raw material. Column of "auxiliary agent particle diameter (µm)" indicates an average particle diameter of a forming auxiliary agent used as a raw material. Column of "ZE: auxiliary agent mass ratio" indicates a mass ratio (the zeolite powder:the forming auxiliary agent) between the zeolite powder and the forming auxiliary agent in the mixture (the forming raw material). It is to be noted that "ZE" means the zeolite powder, and "the auxiliary agent" means the forming auxiliary agent. Column of "zeolite type" means the type of zeolite constituting the zeolite powder. Column of "SiO₂/Al₂O₃ ratio" means a molar ratio of SiO₂ with respect to Al₂O₃ in the zeolite powder. Column of "cell density" in "cell structure" means the cell density of the obtained zeolite structure. Column of "wall thickness" in "cell structure" means the thickness of partition walls of the obtained zeolite structure.

### (Porosity)

The porosity (%) of the partition walls of the zeolite structure is measured by mercury porosimetry using a mercury porosimeter (Auto Pore IV model 9500 manufactured by Micromeritics, Inc.).

### (Zeolite Content)

A mass of the obtained zeolite structure is multiplied by "a zeolite content ratio (mass%) in the forming raw material (excluding water)" (multiplication), and the resultant value is divided by a volume of the zeolite structure, to obtain a zeolite content (g/L). "L" indicates "liter".

### (A/B)

A pore diameter distribution of the partition walls of the zeolite structure is measured by mercury porosimetry using the mercury porosimeter (Auto Pore IV model 9500 manufactured by Micromeritics, Inc.), and it is judged whether or not the distribution has a first maximum point in a range of pore diameters from 0.002 to 0.05 µm and whether or not the distribution has a second maximum point in a range of pore diameters from 0.06 to 10 µm. Moreover, when the distribution has the first maximum point and the second maximum point in the above ranges, respectively, a first maximum value A at the first maximum point is divided by a second maximum value B at the second maximum point to calculate "A/B". It is to be noted that in all of examples and comparative examples, the pore diameter distribution of the partition walls of the zeolite structure had the first maximum value in the range of the pore diameters from 0.002 to 0.05 µm and the second maximum value in the range of the pore diameters from 0.06 to 10 µm.

### (A-axis Compressive Strength)

The A-axis compressive strength indicates a compressive strength specified in JASO standard M505-87 which is an automotive standard issued by the Society of Automotive Engineers of Japan. Specifically, "A-axis compressive strength" is a breaking strength in a case where a compressive load is applied to a transverse surface (the end face) of the zeolite structure in a vertical direction (a central axis direction), and a pressure under which the zeolite structure breaks.

### (NOₓ Gas Purification Performance)

A gas for a test is allowed to flow into the zeolite structure, and the amount of NOₓ in an exhaust gas discharged from the zeolite structure is analyzed with a gas analysis meter. A temperature of the gas for the test allowed to flow into the zeolite structure is set to 20°C. As the zeolite structure for use in the test, there is used a zeolite structure cut in a cylindrical shape and having a bottom surface with a diameter of 2.54 cm and a length of 5.08 cm along a central axis direction. As to the zeolite structure and the gas for the test, a temperature can be regulated with a heater. As the heater, an infrared image furnace is used. As the gas for the test, there is used a gas obtained by mixing nitrogen with 5 vol% of carbon dioxide, 14 vol% of oxygen, 350 ppm of nitrogen monoxide (in terms of volume), 350 ppm of ammonia (in terms of volume) and 10 vol% of water. It is to be noted that as the gas for the test, water, and a mixture gas mixed with another gas are separately prepared. When the test is conducted, these components are mixed in a piping line to obtain the gas for the test. As the gas analysis meter, "MEXA 9100 EGR manufactured by Horiba Ltd." is used. Moreover, a spatial speed during flowing of the gas for the test into the zeolite structure is 50000 (time⁻¹). Table 1 shows an NOₓ gas purification ratio (NOₓ purification ratio) (%). As the NOₓ gas purification ratio, a value obtained by subtracting the amount of NOₓ in a gas discharged from the zeolite structure from the amount of NOₓ in the gas for the test is divided by the amount of NOₓ in the gas for the test, and multiplied 100 times.

**[Table 1]**

| | Zeolite particle dia. (µm) | Auxiliary agent particle dia. (µm) | ZE: auxiliary agent mass ratio | Zeolite type | SiO₂/Al₂O₃ ratio | Cell structure | | Porosity (%) | Zeolite content (g/L) | A/B | A-axis compressive strength (MPa) | NOx purification ratio (%) |
|---|---|---|---|---|---|---|---|---|---|---|---|---|
| | | | | | | Cell density (cells/cm²) | Wall thickness (mm) | | | | | |
| Comparative Example 1 | 15 | 2 | 9.0 : 1.0 | ZSM5 | 60 | 47 | 0.30 | 61 | 410 | 0.6 | 1.6 | 91 |
| Comparative Example 2 | 15 | 2 | 4.0 : 6.0 | ZSM5 | 60 | 47 | 0.30 | 35 | 408 | 22 | 9.1 | 42 |
| Example 1 | 15 | 2 | 8.0 : 2.0 | ZSM5 | 60 | 47 | 0.30 | 55 | 402 | 1.0 | 3.5 | 85 |
| Example 2 | 15 | 2 | 7.0 : 3.0 | ZSM5 | 60 | 47 | 0.30 | 51 | 400 | 5.0 | 4.5 | 82 |
| Example 3 | 15 | 2 | 6.0 : 4.0 | ZSM5 | 60 | 47 | 0.30 | 49 | 405 | 10 | 6.1 | 78 |
| Example 4 | 15 | 2 | 5.0 : 5.0 | ZSM5 | 60 | 47 | 0.30 | 50 | 409 | 20 | 7.5 | 55 |
| Example 5 | 15 | 2 | 5.8 : 4.2 | ZSM5 | 30 | 47 | 0.30 | 50 | 408 | 16 | 7.6 | 63 |
| Example 6 | 15 | 2 | 5.7 : 4.3 | ZSM5 | 110 | 47 | 0.30 | 49 | 408 | 15 | 7.2 | 65 |
| Example 7 | 5 | 2 | 5.8 : 4.2 | β-zeolite | 60 | 47 | 0.30 | 48 | 410 | 16 | 7.0 | 60 |
| Example 8 | 5 | 2 | 5.9 : 4.1 | β-zeolite | 60 | 47 | 0.30 | 47 | 412 | 18 | 6.8 | 66 |
| Example 9 | 15 | 2 | 7.2 : 2.8 | ZSM5 | 60 | 62 | 0.25 | 55 | 380 | 9.0 | 7.2 | 80 |
| Example 10 | 15 | 2 | 7.5 : 2.5 | ZSM5 | 60 | 62 | 0.25 | 56 | 384 | 11 | 7.0 | 82 |

### (Examples 2 to 10, and Comparative Examples 1 and 2)

Zeolite structures were prepared in the same manner as in Example 1 except that "zeolite particle diameter (µm)", "ZE: auxiliary agent mass ratio", "zeolite type", "SiO₂/Al₂O₃ ratio", and "cell density" and "wall thickness" of "cell structure" were changed as shown in Table 1. In the same manner as in Example 1, "porosity (%)", "zeolite content (g/liter)", "A/B", "A-axis compressive strength" and "NOₓ purification ratio (%)" were measured. Results are shown in Table 1.

It is seen from Table 1 that in the zeolite structures of Examples 1 to 10, "A/B" is from 1.0 to 20, and hence the structures have excellent A-axis compressive strength and NOₓ purification performance. On the other hand, it is seen that in the zeolite structure of Comparative Example 1, since "A/B" is smaller than 1.0, the structure has a poor A-axis compressive strength. Moreover, it is seen that in the zeolite structure of Comparative Example 2, since "A/B" exceeds 20, the structure has a poor NOₓ purification ratio (%).

### [Industrial Applicability]

A zeolite structure of the present invention can preferably be utilized to remove NOₓ or the like contained in an exhaust gas discharged from an engine for a car, an engine for a construction machine, a stationary engine for an industry, a burning apparatus or the like.

### [Description of Reference Numerals]

1: partition wall, 2: cell, 3: outer peripheral wall, 4: zeolite base material, 11: one end face, 12: other end face, A: first maximum value, B: second maximum value, D1: first peak, D2: second peak, P1: first maximum point, P2: second maximum point, and 100: zeolite structure.

## Claims

1. A zeolite structure (100) comprising: a zeolite base material (4) having a honeycomb shape and including partition walls (1) disposed to form a plurality of cells (2) which become through channels of a fluid and extend from one end face (11) to the other end face (12),
wherein the partition walls (1) contain a zeolite ion-exchanged with metal ions,
a pore diameter distribution of the partition walls (1), which is a log differential pore volume distribution dV/d (log₁₀D), wherein V is a pore volume per unit mass and D is a pore diameter, in a case where the abscissa indicates a pore diameter (µm) and the ordinate indicates a log differential pore volume (cm³/g) is represented by a curve having a first maximum point (P1) in a range of pore diameters from 0.002 to 0.05 µm, originating from pores of an alumina sol, montmorillonite or boehmite forming auxiliary agent used in formation of the zeolite structure, and a second maximum point (P2) in a range of pore diameters from 0.06 to 10 µm, originating from pores formed among zeolite particles used in formation of the zeolite structure, and
a value obtained by dividing a first maximum value which is a maximum value at the first maximum point (P1) by a second maximum value which is a maximum value at the second maximum point (P2) is from 1.0 to 20.

2. The zeolite structure (100) according to claim 1, wherein in the partition walls (1), a content ratio of the zeolite ion-exchanged with the metal ions is from 50 to 80 mass%.

3. The zeolite structure (100) according to claim 1 or 2, wherein a porosity of the partition walls (1) of the zeolite base material (4) is from 20 to 70%.

4. The zeolite structure (100) according to any one of claims 1 to 3, wherein a cell density of the zeolite base material (4) is from 7 to 155 cells/cm².

5. The zeolite structure (100) according to any one of claims 1 to 4, wherein a thickness of the partition walls (1) of the zeolite base material (4) is from 50 µm to 2 mm.

6. The zeolite structure (100)according to any one of claims 1 to 5, wherein the metal ions included in the zeolite constituting the partition walls (1) are of at least one type selected from the group consisting of iron ions, copper ions and silver ions.

7. A manufacturing method of a zeolite structure (100) according to any one of claims 1 to 6, comprising:
a step of extruding a forming raw material containing a zeolite powder ion-exchanged with metal ions and having an average particle diameter of 5 to 20 µm, and an alumina sol, montmorillonite or boehmite forming auxiliary agent having an average particle diameter of 0.1 to 5 µm at a mass ratio which is from 8.0:2.0 to 5.0:5.0, to obtain a formed article having a honeycomb shape and including partition walls (1) disposed to form a plurality of cells (2) which become through channels of a fluid and extend from one end face (11) to the other end face (12); and
a step of firing the formed article having the honeycomb shape.

## Patentansprüche

1. Zeolithstruktur (100), die Folgendes umfasst: ein Zeolith-Basismaterial (4), das eine Wabenform aufweist und Trennwände (1) umfasst, die angeordnet sind, um eine Vielzahl von Zellen (2) zu bilden, die Durchgangskanäle eines Fluids werden und sich von einer Endseite (11) zu der anderen Endseite (12) erstrecken,
wobei die Trennwände (1) einen Zeolith umfassen, der mit Metallionen ionenausgetauscht ist,
wobei eine Porendurchmesserverteilung der Trennwände (1), die eine logarithmische Differentialporenvolumenverteilung dV/d (log₁₀D) ist, wobei V ein Porenvolumen pro Masseneinheit und D ein Porendurchmesser ist, in einem Fall, in dem die Abszisse einen Porendurchmesser (µm) anzeigt und die Ordinate ein logarithmisches Differentialporenvolumen (cm³/g) anzeigt, durch eine Kurve dargestellt ist, die einen ersten Maximalpunkt (P1) in einem Bereich von Porendurchmessern von 0,002 bis 0,05 µm, der auf Poren eines Aluminiumoxidsol-, Montmorillonit- oder Böhmit-bildenden Hilfsstoffs zurückgeht, der in der Bildung der Zeolithstruktur verwendet wird, und einen zweiten Maximalpunkt (P2) in einem Bereich von Porendurchmessern von 0,06 bis 10 µm aufweist, der auf Poren zurückgeht, die bei zur Bildung der Zeolithstruktur verwendeten Zeolithpartikeln gebildet wurden, und
wobei ein Wert, der durch Dividieren eines ersten Maximalwerts, der ein Maximalwert am ersten Maximalpunkt (P1) ist, durch einen zweiten Maximalwert, der ein Maximalwert am zweiten Maximalpunkt (P2) ist, erhalten wird, 1,0 bis 20 beträgt.

2. Zeolithstruktur (100) nach Anspruch 1, wobei in den Trennwänden (1) ein Inhaltsanteil des mit den Metallionen ionenausgetauschten Zeoliths von 50 bis 80 Massen-% beträgt.

3. Zeolithstruktur (100) nach Anspruch 1 oder 2, wobei eine Porosität der Trennwände (1) des Zeolith-Basismaterials (4) 20 bis 70 % beträgt.

4. Zeolithstruktur (100) nach einem der Ansprüche 1 bis 3, wobei eine Zelldichte des Zeolith-Basismaterials (4) 7 bis 155 Zellen/cm² beträgt.

5. Zeolithstruktur (100) nach einem der Ansprüche 1 bis 4, wobei eine Dicke der Trennwände (1) des Zeolith-Basismaterials (4) 50 µm bis 2 mm beträgt.

6. Zeolithstruktur (100) nach einem der Ansprüche 1 bis 5, wobei die Metallionen, die in dem Zeolith vorhanden sind, der die Trennwände (1) bildet, Metallionen von zumindest einer Art sind, die aus der aus Eisenionen, Kupferionen und Silberionen bestehenden Gruppe ausgewählt ist.

7. Herstellungsverfahren einer Zeolithstruktur (100) nach einem der Ansprüche 1 bis 6, das Folgendes umfasst:
einen Schritt des Extrudierens eines Formungsrohmaterials, das Folgendes enthält: ein Zeolithpulver, das mit Metallionen ionenausgetauscht ist und einen mittleren Partikeldurchmesser von 5 bis 20 µm aufweist, und einen Aluminiumoxidsol-, Montmorillonit- oder Böhmit-bildenden Hilfsstoff mit einem mittleren Partikeldurchmesser von 0,1 bis 5 µm bei einem Massenverhältnis von 8,0:2,0 bis 5,0:5,0, um ein Formteil in Wabenform zu erhalten, der Trennwände (1) umfasst, die angeordnet sind, um eine Vielzahl von Zellen (2) zu bilden, die Durchgangskanäle eines Fluids werden und sich von einer Endseite (11) zu der anderen Endseite (12) erstrecken,
einen Schritt des Brennens des Formteils in Wabenform.

## Revendications

1. Structure zéolitique (100) comprenant :
un matériau de base de zéolite (4) ayant une forme en nid d'abeilles et comprenant des parois de séparation (1) disposées pour former une pluralité de cellules (2) qui deviennent des canaux traversant d'un fluide et s'étendent d'une première face d'extrémité (11) à l'autre face d'extrémité (12),
dans laquelle les parois de séparation (1) contiennent une zéolite à ions échangés avec des ions métalliques,
une distribution de diamètre de pore des parois de séparation (1), qui est une distribution de volume de pores différentiel logarithmique dV/d (log₁₀D), où V est un volume de pores par unité de masse et D est un diamètre de pore, dans un cas où l'abscisse indique un diamètre de pore (µm) et l'ordonnée indique un volume de pores différentiel logarithmique (cm³/g), est représentée par une courbe ayant un premier point maximum (P1) dans une plage de diamètres de pore de 0,002 à 0,05 µm, provenant de pores d'un agent auxiliaire de formation de sol d'alumine, de montmorillonite ou de boehmite utilisé durant une formation de la structure zéolitique, et un second point maximum (P2) dans une plage de diamètres de pore de 0,06 à 10 µm, provenant de pores formés parmi des particules de zéolite utilisées dans la formation de la structure zéolitique, et
une valeur obtenue en divisant une première valeur maximum qui est une valeur maximum au niveau du premier point maximum (P1) par une seconde valeur maximum qui est une valeur maximum au niveau du second point maximum (P2) est de 1,0 à 20.

2. Structure zéolitique (100) selon la revendication 1, dans laquelle dans les parois de séparation (1), un rapport de teneur de la zéolite à ions échangés avec les ions métalliques est de 50 à 80 % en masse.

3. Structure zéolitique (100) selon la revendication 1 ou 2, dans laquelle une porosité des parois de séparation (1) du matériau de base de zéolite (4) est de 20 à 70 %.

4. Structure zéolitique (100) selon l'une quelconque des revendications 1 à 3, dans laquelle une densité cellulaire du matériau de base de zéolite (4) est de 7 à 155 cellules/cm².

5. Structure zéolitique (100) selon l'une quelconque des revendications 1 à 4, dans laquelle une épaisseur des parois de séparation (1) du matériau de base de zéolite (4) est de 50 µm à 2 mm.

6. Structure zéolitique (100) selon l'une quelconque des revendications 1 à 5, dans laquelle les ions métalliques inclus dans la zéolite constituant les parois de séparation (1) sont d'au moins un type choisi dans le groupe constitué d'ions fer, d'ions cuivre et d'ions argent.

7. Procédé de fabrication d'une structure zéolitique (100) selon l'une quelconque des revendications 1 à 6, comprenant :
une étape d'extrusion d'une matière première de formation contenant une poudre de zéolite à ions échangés avec des ions métalliques et ayant un diamètre de particule moyen de 5 à 20 µm, et un agent auxiliaire de formation de sol d'alumine, de montmorillonite ou de boehmite ayant un diamètre de particules moyen de 0,1 à 5 µm à un rapport massique qui est de 8,0 : 2,0 à 5,0 : 5,0, pour obtenir un article formé ayant une forme en nid d'abeilles et comprenant des parois de séparation (1) disposées pour former une pluralité de cellules (2) qui deviennent des canaux traversants d'un fluide et s'étendent à partir d'une première face d'extrémité (11) à l'autre face d'extrémité (12) ; et
une étape de cuisson de l'article formé ayant la forme en nid d'abeilles.
